(19) Europäisches Patentamt

European Patent Office

Office européen des brevets

(11) Veröffentlichungsnummer: **0 261 732 B1**

(12) **EUROPÄISCHE PATENTSCHRIFT**

(45) Veröffentlichungstag der Patentschrift: **01.04.92**

(21) Anmeldenummer: **87201778.5**

(22) Anmeldetag: **17.09.87**

(51) Int. Cl.⁵: **C09K 11/02**, H01J 9/22

(54) **Verfahren zur Herstellung von Leuchtstoffschirmen.**

(30) Priorität: **20.09.86 DE 3632050**

(43) Veröffentlichungstag der Anmeldung:
**30.03.88 Patentblatt 88/13**

(45) Bekanntmachung des Hinweises auf die Patenterteilung:
**01.04.92 Patentblatt 92/14**

(84) Benannte Vertragsstaaten:
**AT BE CH DE FR GB IT LI NL SE**

(56) Entgegenhaltungen:

**DATABASE DERWENT WORLD PATENT IN-DEX, AN 84-066351, 1987, Derwent Publications Ltd, London, GB; & JP-A-59 022 971 (HITACHI K.K.) 06-02-1984**

(73) Patentinhaber: **Philips Patentverwaltung GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**BE CH FR GB IT LI NL SE AT**

(72) Erfinder: **Busselt, Wolfgang
Pirolweg 18
W-5100 Aachen-Walheim(DE)**
Erfinder: **Klein, Ewald
Am Friedrich 11
W-5100 Aachen(DE)**
Erfinder: **Raue, Ralf, Dr.
Meischenfeld 1
W-5100 Aachen-Kornelimünster(DE)**

(74) Vertreter: **Koch, Ingo, Dr.-Ing. et al
Philips Patentverwaltung GmbH Wendenstrasse 35 Postfach 10 51 49
W-2000 Hamburg 1(DE)**

**Beschreibung**

Die Erfindung betrifft ein Verfahren zur Herstellung von Leuchtstoffschirmen für Kathodenstrahlröhren durch Sedimentation eines Leuchtstoffpulvers, wobei eine wasserglashaltige Leuchtstoffsuspension einer wäßrigen, über einem Substrat für den Leuchtstoffschirm stehenden Elektrolytlösung zugegeben wird.

Ein derartiges Verfahren ist aus DE-C-889 111 bekannt. Dabei erreicht man eine Fixierung der Leuchtstoffkörner auf dem Substrat z.B. durch Zusatz von Kaliwasserglas. Aus DE-B-1 564 906 ist bekannt, daß durch den Zusatz von wasserlöslichen Alkalisalzen zur Elektrolytlösung eine bessere Haftung der Leuchtstoffschirme möglich ist. Weiterhin ist aus DE-A-3 427 009 bekannt, daß durch den Zusatz von Glycerin und/oder Äthylenglykol zur Elektrolytlösung eine Erhöhung der Packungsdichte erreicht werden kann.

Aus JP-A-59 022 971 sind schließlich ammoniumnitrat-haltige Beschichtungs Zusammensetzungen für Lenchtstoffschime bekannt, in welchen jedoch an schließlich Bindemittel auf der Basis von organischen Polymeren wie etwa Polyethylenoxid verwendet werden.

Die Packungsdichte eines Leuchtstoffschirms beeinflußt wesentlich dessen Eigenschaften, insbesondere das Auflösungsvermögen. Für die Erzielung einer sehr hohen Packungsdichte ist es wesentlich, ein vorzeitiges Ausflocken der Suspension während der Sedimentation zu unterdrücken.

Aufgabe der Erfindung ist es, ein Verfahren anzugeben, welches die Herstellung von Leuchtstoffschirmen sehr hoher Packungsdichten erlaubt, d.h. Packungsdichten nahe den theoretisch erreichbaren Packungsdichten von etwa 60% für statistisch angeordnete kugelförmige Körner (M.J. Powell, Powder Technology 25 (1980) 45).

Diese Aufgabe wird erfindungsgemäß dadurch gelöst, daß der Leuchtstoffsuspension und/oder der Elektrolytlösung Ammoniumnitrat zugesetzt wird.

Der erfindungsgemäße Zusatz von Ammoniumnitrat hat eine Herabsetzung des pH-Werts der schwach alkalischen Elektrolytlösung zur Folge und bewirkt damit eine Neutralisierung dieser Lösung. Dies steht im Gegensatz zu der im obenerwähnten Dokument DE-B-1 564 906 beschriebenen Verwendung von Alkalisalzen, die entweder keinen Einfluß auf den pH-Wert haben oder aber diesen erhöhen.

Der erfindungsgemäße Zusatz von Ammoniumnitrat gestattet die Herstellung von Leuchtstoffschirmen mit Packungsdichten zwischen 50 und 60%. Die Schirme weisen eine gute Haftung und eine geringe Oberflächenrauhigkeit auf. Weiterhin wurde beobachtet, daß der Sedimentationsvorgang insgesamt schneller abläuft.

Die Erfindung wird im folgenden anhand einiger Ausführungsbeispiele näher erläutert.

Beispiel 1

Es wird eine Leuchtstoffsuspension aus Leuchtstoffpulver und einer Kaliwasserglaslösung hergestellt. Als Leuchtstoff wird $Y_2O_3$:Eu verwendet. Die Leuchtstoffsuspension wird zu einer wäßrigen Elektrolytlösung zugegeben, wobei eine Einfüllvorrichtung verwendet wird. Die Elektrolytlösung steht über einem Substrat für einen Leuchtstoffschirm. Die Elektrolytlösung enthält $Ba(NO_3)_2$ in ionogener Form. Der Leuchtstoffsuspension wird vor der Zugabe zur Elektrolytlösung $NH_4NO_3$ zugesetzt, und zwar 60 ml einmolare $NH_4NO_3$-Lösung auf 340 ml Suspension. Die so hergestellten Schichten weisen nach dem Trocknen Packungsdichten zwischen 50 und 60% auf.

Beispiele 2 bis 10

Beispiel 1 wird wiederholt mit der Maßgabe, daß die Konzentration an $NH_4NO_3$ schrittweise von 0 (Vergleichsbeispiel Vgl.) auf 100 ml erhöht wird, wobei das $NH_4NO_3$ entweder (wie in Beispiel 1) der Suspension oder der Elektrolytlösung beigefügt wird. Die Striche in der folgenden Tabelle markieren Konzentrationen, bei denen ein Ausfall von Kieselsäure beobachtet wurde und daher keine brauchbaren Schirme erhalten wurden.

## I. Zugabe von $NH_4NO_3$ zur Suspension

| Beispiel | $NH_4NO_3$ ml | Packungsdichte % |
|---|---|---|
| Vgl. | 0 | 40 |
| 2 | 20 | – |
| 3 | 40 | – |
| 1 | 60 | 47 |
| 4 | 80 | 51 |
| 5 | 100 | 42 |

## II. Zugabe von $NH_4NO_3$ zur Elektrolytlösung

| | | |
|---|---|---|
| Vgl. | 0 | 39 |
| 6 | 20 | 42 |
| 7 | 40 | 51 |
| 8 | 60 | 54 |
| 9 | 80 | 52 |
| 10 | 100 | 38 |

Die Meßwerte zeigen eine signifikante Erhöhung der Packungsdichte bei Zugabe von $NH_4NO_3$. Dabei ist die Erhöhung der Packungsdichte auf einen schmalen Konzentrationsbereich beschränkt.

Es fällt auf, daß bei der $NH_4NO_3$-Zugabe zur Elektrolytlösung geringfügig höhere Packungsdichten gemessen werden als bei Zugabe zur Suspension. Bei der letzteren Variante wurde jedoch eine etwas bessere Naßhaftung gefunden.

**Patentansprüche**

1. Verfahren zur Herstellung von Leuchtstoffschirmen für Kathodenstrahlröhren durch Sedimentation eines Leuchtstoffpulvers, wobei eine wasserglashaltige Leuchtstoffsuspension einer wäßrigen, über einem Substrat für den Leuchtstoffschirm stehenden Elektrolytlösung zugegeben wird, dadurch gekennzeichnet, daß der Leuchtstoffsuspension und/oder der Elektrolytlösung Ammoniumnitrat zugesetzt wird.

**Claims**

1. A method of manufacturing luminescent screens for cathode ray tubes through sedimentation of a luminescent powder whereby a suspension of a luminescent material which comprises water glass is added to an aqueous electrolyte solution in which a substrate for the luminescent screen is submerged, characterized in that ammonium nitrate is added to the suspension of luminescent material and/or to the electrolyte solution.

**Revendications**

1. Procédé pour la fabrication d'écrans luminescents, destinés à des tubes à rayons cathodiques, par sédimentation d'une poudre luminescente, une suspension de matière luminescente contenant du verre soluble étant ajoutée à une solution d'électrolyte aqueuse submergeant un substrat pour un écran luminescent, caractérisé en ce que la suspension de matière luminescente et/ou la solution d'électrolyte est additionnée de nitrate d'ammonium.